# FASCICULE DE BREVET EUROPEEN

(11) **EP 0 722 914 B1**
(45) Date de publication et mention de la délivrance du brevet: **18.04.2001**
(21) Numéro de dépôt: 96400064.0
(22) Date de dépôt: 11.01.1996
(51) Int. Cl.: C03C 25/10, C08J 5/08

(54) **Fils de verre ensimés destinés au renforcement de matières organiques**
Geschichtete Glasfasern für die Verstärkung organischer Werkstoffe
Sized glass fibres for organic material reinforcement

(30) Priorité: 19.01.1995 FR 9500570
(43) Date de publication de la demande: 24.07.1996
(73) Titulaire: Saint-Gobain Vetrotex France S.A., 73000 Chambéry (FR)
(72) Inventeur: Arpin, Michel, F-73290 La Motte Servolex (FR); Gasca, Jean-Philippe, F-73000 Chambery (FR)
(74) Mandataire: Muller, René

(56) Documents cités:
- WO-A-91/09082
- US-A- 4 410 645
- US-A- 4 615 946
- DATABASE WPI Section Ch, Week 8411 Derwent Publications Ltd., London, GB; Class A, AN 84-065811 XP002000982 & JP-A-59 021 542 (NITTO ELECTRIC IND KK) , 3 Février 1984

## Description

La présente invention concerne des fils de verre ensimés destinés au renforcement de matières organiques thermoplastiques telles que des polyesters thermoplastiques et, plus spécialement, des polyesters et copolyesters d'acide téréphtalique. La présente invention concerne également les produits renforcés (ou « composites ») obtenus en utilisant les fils ensimés précédemment mentionnés.

Les matières thermoplastiques sont utilisées dans l'industrie depuis plusieurs années pour réaliser des moulages. Certaines de ces matières ne permettent pas, cependant, lorsqu'elles sont utilisées seules, d'obtenir des pièces moulées présentant des propriétés mécaniques suffisantes. C'est le cas de plusieurs polyesters thermoplastiques tels que le polytéréphtalate d'éthylène (ou «PET»), le polytéréphtalate de butylène (ou «PBT») ou le polytéréphtalate de cyclohexane diméthanol (ou « PCT ») qui, lorsqu'ils sont moulés sur des épaisseurs importantes, donnent des pièces moulées relativement fragiles.

De telles matières sont, par conséquent, généralement associées à des renforts avant moulage de façon à obtenir des composites présentant des propriétés mécaniques améliorées. Les fils (ou « fibres ») de verre constituent des renforts de choix pour des telles matières. Ces fils sont habituellement revêtus, au cours de leur fabrication, de compositions d'ensimage permettant d'assurer la liaison des filaments qui les constituent entre eux et permettant de les protéger contre l'abrasion, ces compositions contribuant également à créer une liaison entre le verre et la matière que les fils visent à renforcer.

Les fils de verre actuellement utilisés pour le renforcement des polyesters thermoplastiques sont ainsi revêtus de compositions d'ensimage traditionnelles à base, par exemple, d'agents de couplage tels que des silanes et d'agents filmogènes collants tels que des polyuréthanes ou des polymères époxy. Des exemples de fils de verre utilisés pour le renforcement du PBT sont notamment donnés dans les brevets US-A-4 271 229 et US-A-4 615 946. Les propriétés mécaniques des composites obtenus à l'aide des fils de verre ensimés traditionnels et des polyesters thermoplastiques précédemment mentionnés sont meilleures que celles desdits polyesters non renforcés par lesdits fils de verre et sont satisfaisantes mais il peut être intéressant, pour certaines applications, d'obtenir une amélioration plus importante des propriétés mécaniques, notamment une amélioration importante des propriétés de résistance aux chocs.

La présente invention a donc pour objet d'obtenir des composites, à base de fils de verre et de matières thermoplastiques telles que des polyesters thermoplastiques et plus spécialement des polyesters et copolyesters d'acide téréphtalique, présentant des propriétés mécaniques, notamment des propriétés de résistance aux chocs, améliorées par rapport aux propriétés des composites généralement obtenus à partir des mêmes matières et des fils de verre traditionnels.

Ce but est atteint grâce à des fils de verre revêtus d'une composition d'ensimage comprenant (A) au moins un alcane polyglycidyl éther (B) au moins un agent de couplage et (C) au moins un agent filmogène collant, tels que définis dans la revendication 1.

La présente invention concerne également les composites obtenus à partir des fils ensimés selon l'invention, ces composites comprenant au moins une matière organique telle qu'un polyester thermoplastique et des fils de verre ensimés, une partie au moins desdits fils étant les fils de verre ensimés selon l'invention.

Les fils ensimés selon l'invention sont préparés selon des procédés connus en soi. L'un de ces procédés consiste à étirer des filets de verre fondu sous la forme d'une ou plusieurs nappes de filaments continus à partir des orifices d'une ou plusieurs filières, à revêtir lesdits filaments de la composition d'ensimage telle que mentionnée dans la définition de l'invention avant de rassembler les filaments en un ou plusieurs fils. Ces fils peuvent ensuite être bobinés sur des supports en rotation avant de subir d'autres opérations (extraction en vue d'une coupe indirecte, tissage...), être répartis sur des convoyeurs en mouvement ou encore être coupés après formation par un organe servant à les étirer (coupe directe sous filière). Ainsi, selon les caractéristiques mécaniques que l'on désire obtenir au niveau des produits renforcés et selon les méthodes de mise en oeuvre utilisées, la présentation des fils de verre ensimés varie. Les fils de verre selon l'invention peuvent notamment se présenter sous forme d'enroulements de fils continus (stratifils, gâteaux, cops...), de fils coupés, de mats (nappes de fils continus entremêlés), de tresses, de rubans, de réseaux, etc... ces différents fils étant généralement composés de filaments de diamètre compris entre 5 et 24 µm.

La composition d'ensimage revêtant les fils selon l'invention est, de préférence, une composition aqueuse facilement manipulable comprenant, par exemple, entre 90 et 99 % en poids d'eau. Dans la plupart des cas, elle se présente sous forme d'une dispersion aqueuse (émulsion, suspension, mélange d'émulsion(s) et/ou de suspension(s)) et, de préférence, sous forme d'une émulsion aqueuse ou d'un mélange aqueux d'émulsions, et les fils revêtus de ladite composition font l'objet d'un séchage avant utilisation pour le renforcement de matières organiques, l'eau incluse dans la composition d'ensimage pouvant nuire à la bonne adhésion verre-matière organique.

Il convient, à ce sujet, de préciser que par « fils de verre revêtus d'une composition d'ensimage comprenant... » on entend, selon l'invention, des fils de verre « qui ont été revêtus d'une composition d'ensimage comprenant... », c'est-à-dire non seulement les fils revêtus de la composition en question obtenus au sortir du ou des dispositifs de dépôt d'ensimage (les composants de la composition d'ensimage pouvant éventuellement être déposés séparément ou en plusieurs étapes), mais également ces mêmes fils après séchage et/ou après d'autres traitements visant, par exemple, à éliminer certains composants de la composition d'ensimage (notamment l'eau incluse dans la composition lorsque la composition se présente sous forme d'une dispersion aqueuse) et/ou à polymériser certains composants de ladite composition.

De préférence, dans les cas où la composition d'ensimage selon l'invention se présente sous forme d'une dispersion aqueuse, l'extrait sec de ladite composition est compris entre 1 et 15 % en poids et, avantageusement, entre 2 et 10 % en poids.

Par « alcane polyglycidyl éther » on entend, selon l'invention, tout composé comprenant au moins deux fonctions glycidyl éther, ledit composé n'étant constitué que de carbone(s) et d'hydrogène(s) en dehors desdites fonctions. Ce composé, pouvant également être appelé « polyol polyglycidyl éther », se présente ainsi sous forme d'une chaîne hydrocarbonée, ramifiée ou non, comprenant des cycles ou non, sur laquelle sont branchées au moins deux fonctions glycidyl éther. De préférence, l'alcane polyglycidyl éther mentionné dans la définition de l'invention est un alcane di- ou triglycidyl éther, c'est-à-dire un composé répondant à la formule suivante :

C(R₁)(R₂)(R₃)(R₄)

dans laquelle :
- R₁ est choisi parmi les groupements suivants : -X, -R'₁X
- R₂ est choisi parmi les groupements suivants : -X, -R'₂X
- R₃ est choisi parmi les groupements suivants : -H, -R'₃, -R'₃X, -X
- R₄ est choisi parmi les groupements suivants : -H, -R'₄
avec:
- X est une fonction glycidyl éther de formule : 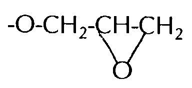
- R'₁, R'₂, R'₃, R'₄ sont des groupements alkyles avec un nombre de carbone(s) de préférence inférieur à 4.

Selon un mode de réalisation préféré, l'alcane polyglycidyl éther mentionné dans la définition de l'invention est un triméthylol propane triglycidyl éther (commercialisé notamment sous la référence « Heloxy 48 » par la société SHELL) répondant à la formule précédente avec :
- R₁ = -CH₂-CH₃
- R₂ = R₃ = R₄ = -CH₂-X

Selon un autre mode de réalisation de l'invention, l'alcane polyglycidyl éther est un triméthylol éthane triglycidyl éther (commercialisé notamment sous la référence « Heloxy 44 » par la société SHELL) répondant à la formule précédente avec :
- R₁ = -CH₃
- R₂ = R₃ = R₄ = -CH₂-X

La composition d'ensimage servant à revêtir les fils selon l'invention comprend au moins un alcane polyglycidyl éther et peut comprendre un mélange d'alcanes polyglycidyl éther, par exemple un mélange de triméthylol propane triglycidyl éther et de triméthylol éthane triglycidyl éther.

Il est permis de supposer, sans que cette supposition ne limite la portée de notre invention, que l'alcane polyglycidyl éther de la composition d'ensimage selon l'invention joue un rôle d'agent réticulant vis-à-vis de la matière organique à renforcer et/ou joue un rôle de co-agent de couplage renforçant l'adhésion entre les fils de verre et la matière à renforcer lors de la réalisation de composites à partir desdits fils et desdites matières, et permet d'améliorer de ce fait les propriétés mécaniques des composites obtenus. Ce composé présente en outre l'avantage de ne pas être toxique et répond donc à un souci de sécurité constant, lequel prévaut généralement dans l'industrie et notamment dans le domaine des compositions d'ensimage.

Le taux d'alcane(s) polyglycidyl éther au sein de la composition d'ensimage selon l'invention est généralement compris entre 0,1 et 6 % et, de préférence, entre 0,2 et 5 % en poids de ladite composition lorsque celle-ci se présente sous forme d'une dispersion aqueuse.

Outre le ou les alcane(s) polyglycidyl éther précédemment mentionné(s), la composition revêtant les fils de verre selon l'invention comprend au moins un agent de couplage. Cet agent de couplage contribue au couplage entre les fils de verre et la matière organique renforcée et peut être choisi parmi les agents de couplage bien connus de l'homme de l'art (silanes, titanates...). De préférence, l'agent de couplage présent dans la composition selon l'invention est un organosilane soluble dans l'eau, notamment un aminosilane ou un époxysilane. A titre d'exemples non exhaustifs, l'agent de couplage présent dans la composition précitée peut ainsi être un gamma-aminopropyltriéthoxysilane (commercialisé notamment sous la référence « A 1100» par la société UNION CARBIDE), un N-bêta(aminoéthyl) gamma-aminopropyltriméthoxysilane (commercialisé notamment sous la référence « A 1120 » par la société UNION CARBIDE), un gamma-méthacryloxypropyltriméthoxysilane, un gamma-glycidoxypropyltriméthoxysilane, etc... La composition d'ensimage peut également comprendre un mélange d'agents de couplage, notamment un mélange de deux des organosilanes précités.

De préférence, le taux d'organosilanes au sein de la composition d'ensimage selon l'invention est compris entre 0,1 et 2 % en poids de ladite composition lorsque celle-ci se présente sous forme d'une dispersion aqueuse.

La composition d'ensimage selon l'invention comprend également au moins un agent filmogène collant. Cet agent agit notamment sur l'intégrité et la protection des fils de verre ensimés ; il permet également de maintenir les composés actifs de la composition (notamment le ou les alcane(s) polyglycidyl éther) à la surface desdits fils. Lorsque la composition selon l'invention se présente sous forme d'une dispersion aqueuse, cet agent collant filmogène doit pouvoir être mis en émulsion, suspension ou solution dans l'eau. Il peut consister notamment en un polymère époxy, un polyuréthane, un copolymère époxy polyuréthane, un polyisocyanate contenant des isocyanates bloqués, etc... La composition d'ensimage peut également comprendre un mélange d'agents collants filmogènes. Le taux d'agent(s) collant(s) filmogène(s) est préférentiellement compris entre 0,2 et 8 % et, de préférence, entre 1 et 6 % en poids de la composition lorsque celle-ci se présente sous forme d'une dispersion aqueuse.

Dans la plupart des cas et de préférence selon l'invention, le rapport entre le taux d'alcane(s) polyglycidyl éther et le taux d'agent(s) collant(s) filmogène(s) au sein de la composition est compris entre 0,1 et 1.

Dans un mode de réalisation de l'invention, la composition d'ensimage revêtant les fils selon l'invention peut également comprendre au moins un agent lubrifiant, dans des taux compris entre 0 et 2 % en poids de ladite composition. Cet agent lubrifiant peut être tout type d'agent lubrifiant habituellement utilisé par l'homme de l'art dans les compositions d'ensimage pour fils de verre, tel qu'un polyéthylène glycol, un polyester d'acide gras éthoxylé, etc... Cet agent peut, notamment, être présent dans la composition d'ensimage selon l'invention lorsque les fils de verre selon l'invention sont obtenus sous forme de stratifils.

La composition d'ensimage selon l'invention peut, de la même façon, selon les modes de réalisation de l'invention, comprendre tout type d'additif habituellement utilisé dans ce genre de composition et notamment un tensioactif et/ou un agent mouillant et/ou un agent antistatique, etc...

La composition selon l'invention peut être obtenue en mélangeant simultanément tous les composants ou en ajoutant les composants en plusieurs étapes. Généralement, les composés actifs (notamment (A), (B) et (C) selon l'invention) sont ajoutés sous forme «prédiluée», c'est-à-dire en solution ou en émulsion dans un solvant tel que l'eau. L'agent de couplage organosilane est ainsi généralement ajouté à la composition sous forme hydrolysée, et l'alcane polyglycidyl éther et l'agent filmogène collant sont généralement ajoutés sous forme d'émulsions. Après mélange des composés actifs, un solvant, notamment l'eau, peut être ajouté au mélange afin d'obtenir la composition et les proportions désirées.

Eventuellement, un acide organique (tel que l'acide acétique) ou une base (telle que l'ammoniaque) peut être ajouté(e) à la composition d'ensimage selon l'invention, par exemple avant incorporation d'agent(s) de couplage organosilane, de façon à ajuster le pH de ladite composition, afin d'obtenir une composition stable.

La perte au feu des fils ensimés selon l'invention est préférentiellement comprise entre 0,1 et 2 % en poids (et, de préférence, entre 0,1 et 1 % en poids pour les fils coupés). Ces fils permettent de renforcer efficacement les matières organiques thermoplastiques telles que les polyesters thermoplastiques, comme illustré ultérieurement.

Les matières renforcées comprennent, de préférence, au moins un polytéréphtalate de butylène (PBT) et/ou au moins un polytéréphtalate d'éthylène (PET) et/ou au moins un copolymère de téréphtalate de butylène et de téréphtalate d'éthylène, ces polymères et/ou copolymères pouvant se présenter sous forme amorphe, cristalline ou semi-cristalline. Les PBT, PET et copolymères précédemment mentionnés peuvent être obtenus selon des méthodes connues de l'homme de l'art, notamment par alcoolisation d'esters d'acide téréphtalique avec de l'éthylène glycol ou du butanediol, puis polymérisation, en chauffant les glycols avec les acides ou les dérivés halogénés des acides ou bien, pour les copolymères, à partir de copolymères de composés vinylique aromatiques et de copolymères modifiés.

Les composites selon l'invention comprennent ainsi au moins une matière organique thermoplastique et des fils de verre ensimés, une partie au moins desdits fils étant les fils de verre ensimés selon l'invention.

Ces composites sont réalisés selon des méthodes bien connues de l'homme de l'art (moulage par injection, extrusion...). Le taux de fils de verre au sein des composites réalisés est, de préférence compris entre 5 et 60 % en poids des composites.

Les exemples suivants illustrent les compositions d'ensimage et les fils de verre ensimés selon la présente invention et permettent de comparer les propriétés mécaniques obtenues pour des composites réalisés à partir de fils de verre selon l'invention avec les propriétés mécaniques obtenues pour des composites réalisés à partir de fils de verre traditionnels.

### EXEMPLE DE RÉFÉRENCE

Dans cet exemple, des filaments de verre de 10 µm de diamètre, obtenus par étirage de filets de verre fondu à partir d'une filière, sont revêtus d'une composition d'ensimage comprenant 0,4 % en poids d'un agent de couplage gamma-aminopropyltriéthoxysilane (commercialisé sous la référence «Silane A 1100» par la société UNION CARBIDE); 4,6 % en poids d'un agent filmogène collant sous forme d'un polymère époxy (correspondant à 11,5 % en poids d'une émulsion commercialisée sous la référence « Néoxyl 962 » par la société DSM); 0,5% en poids de nonylphénoléthoxylé à 30 moles d'oxyde d'éthylène et 94,5 % en poids d'eau (soit un extrait sec de 5,5 % en poids).

Les filaments revêtus d'ensimage sont ensuite rassemblés en fils, lesquels sont bobinés pour donner des enroulements. Les fils sont ensuite extraits des enroulements et coupés à une longueur de 4,5 mm par un organe servant à les entraîner mécaniquement. La perte au feu des fils obtenus est de 0,65 % en poids.

Des composites sont ensuite réalisés à partir d'une extrudeuse Clextral BC 45 (commercialisée par la société CLEXTRAL) alimentée par les fils coupés obtenus et par du PBT sous forme de granulés (commercialisé sous la référence « Ultradur B 4500 » par la société BASF). Le taux de verre au sein des composites obtenus est de 15 % en poids.

Plusieurs éprouvettes des composites obtenus sont réalisées et les contraintes à la rupture en traction, flexion, ainsi que les résistances aux chocs Charpy et Izod entaillé de ces éprouvettes sont mesurées dans les conditions définies respectivement par les normes ISO R 527, ISO R 178, ISO R 179 et ISO R 180. Les résultats obtenus sont rapportés dans le tableau comparatif en annexe. Les écarts types sont indiqués entre parenthèses.

### EXEMPLE 1

Dans cet exemple, des filaments de verre de 10 µm de diamètre, obtenus par étirage de filets de verre fondu à partir d'une filière, sont revêtus d'une composition d'ensimage comprenant 1,1 % en poids de triméthylol propane triglycidyl éther (commercialisé sous la référence « Heloxy 48 » par la société SHELL) ; 0,4 % en poids d'un agent de couplage gamma-aminopropyltriéthoxysilane (commercialisé sous la référence «Silane A 1100» par la société UNION CARBIDE) ; 0,45 % en poids d'un agent de couplage gamma-glycidoxypropyl triméthoxysilane (commercialisé sous la référence « Silane A 187 » par la société UNION CARBIDE) ; 4,3 % en poids d'un agent filmogène collant sous forme d'un polymère époxy (correspondant à 7,17 % en poids d'une émulsion commercialisée sous la référence « Epirez 5520 W 60 » par la société SHELL) et 93,75 % en poids d'eau (soit un extrait sec de 6,25 % en poids).

Les filaments revêtus d'ensimage sont ensuite rassemblés en fils, lesquels sont bobinés puis coupés comme dans l'exemple de référence. La perte au feu des fils obtenus est de 0,6 % en poids.

Des composites sont ensuite réalisés à partir des fils coupés obtenus, comme dans l'exemple de référence. Les propriétés mécaniques des composites (comprenant le même taux de verre que dans l'exemple de référence) sont également mesurées et rapportées dans le tableau comparatif en annexe.

### EXEMPLE 2

Dans cet exemple, des filaments de verre obtenus par étirage de filets de verre fondu à partir d'une filière sont revêtus d'une composition d'ensimage comprenant 1,1 % en poids de triméthylol propane triglycidyl éther (« Heloxy 48 ») ; 0,8 % en poids d'un agent de couplage gamma-aminopropyltriéthoxysilane («A 1100») ; 4,3 % en poids d'un agent filmogène collant sous forme d'un polymère époxy (correspondant à 10,75 % en poids d'une émulsion commercialisée sous la référence « Néoxyl 962 » par la société DSM) et 93,8 % en poids d'eau (soit un extrait sec de 6,2 % en poids). Les filaments revêtus d'ensimage sont ensuite rassemblés en fils, lesquels sont bobinés puis coupés comme dans l'exemple de référence. La perte au feu des fils obtenus est de 0,6 % en poids.

Des composites sont ensuite réalisés à partir des fils coupés obtenus, comme dans l'exemple de référence. Les propriétés mécaniques des composites (comprenant le même taux de verre que dans l'exemple de référence) sont également mesurées et rapportées dans le tableau comparatif en annexe.

On observe que les propriétés mécaniques des composites comprenant des fils selon l'invention (exemples 1 et 2) sont significativement meilleures que les propriétés mécaniques des composites comprenant des fils ensimés traditionnels (exemple de référence).

Les fils de verre selon l'invention sont principalement destinés au renforcement de polyesters thermoplastiques tels que le PBT, le PET ou des copolymères de glycol et d'acide téréphtalique ou isophtalique.

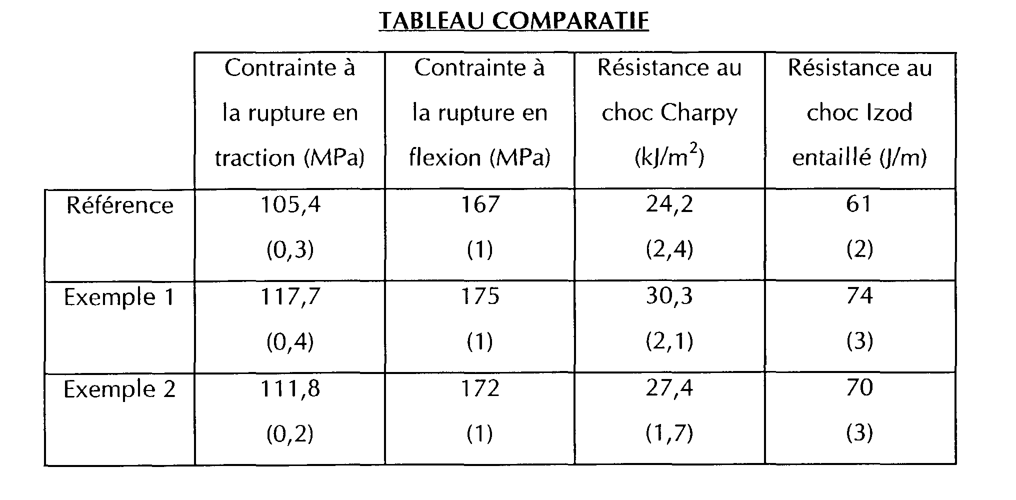

## Revendications

1. Fils de verre revêtus d'une composition d'ensimage comprenant :
(A) au moins un alcane polyglycidyl éther, comprenant au moins deux fonctions glycidyl éther et constitué uniquement de carbone(s) et d'hydrogène(s) en dehors desdites fonctions,
(B) au moins un agent de couplage choisi parmi les silanes et les titanates, et
(C) au moins un agent filmogène collant sous forme d'un polymère ou d'un copolymère agissant sur l'intégrité et la protection des fils de verre.

2. Fils de verre selon la revendication 1, caractérisés en ce que l'alcane polyglycidyl éther répond à la formule suivante :
C(R₁)(R₂)(R₃)(R₄)
dans laquelle :
• R₁ est choisi parmi les groupements suivants : -X, -R'₁X
• R₂ est choisi parmi les groupements suivants : -X, -R'₂X
• R₃ est choisi parmi les groupements suivants : -H, -R'₃, -R'₃X, -X
• R₄ est choisi parmi les groupements suivants : -H, -R'₄
avec :
• X est une fonction glycidyl éther de formule : 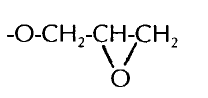
• R'₁, R'₂, R'₃, R'₄ sont des groupements alkyles.

3. Fils de verre selon l'une des revendications 1 ou 2, caractérisés en ce que l'agent de couplage est un organosilane.

4. Fils de verre selon l'une des revendications 1 à 3, caractérisés en ce que l'agent filmogène collant est un polymère époxy, un polyuréthane, un copolymère époxy polyuréthane ou un polyisocyanate contenant des isocyanates bloqués.

5. Fils de verre selon l'une des revendications 1 à 4, caractérisés en ce que la composition d'ensimage comprend en outre (D) au moins un agent lubrifiant.

6. Fils de verre selon l'une des revendications 1 à 5, caractérisés en ce que la composition d'ensimage comprend en outre (E) au moins un tensioactif et/ou un agent mouillant et/ou un agent antistatique.

7. Fils de verre selon l'une des revendications 1 à 6, caractérisés en ce que la composition d'ensimage se présente sous forme d'une dispersion aqueuse.

8. Fils de verre selon la revendication 7, caractérisés en ce que le taux d'alcane(s) polyglycidyl éther est compris entre 0,1 et 6 % en poids de la composition.

9. Fils de verre selon l'une des revendications 7 ou 8, caractérisés en ce que le taux d'agent(s) filmogène(s) collant(s) est compris entre 0,2 et 8 % en poids de la composition.

10. Fils de verre selon l'une des revendications 7 à 9, caractérisés en ce que l'extrait sec de la composition est compris entre 1 et 15 % en poids de ladite composition.

11. Fils de verre selon l'une des revendications 1 à 10, caractérisés en ce que leur perte au feu est comprise entre 0,1 et 2 % en poids.

12. Composite comprenant au moins un polyester thermoplastique et des fils de verre ensimés, une partie au moins desdits fils étant des fils de verre selon l'une des revendications 1 à 11.

13. Composite selon la revendication 12, caractérisé en ce que le polyester thermoplastique comprend au moins un polytéréphtalate de butylène et/ou au moins un polytéréphtalate d'éthylène et/ou au moins un copolymère de téréphtalate de butylène et de téréphtalate d'éthylène.

## Patentansprüche

1. Glasfibern, die mit einer Schmälzezusammensetzung beschichtet sind, welche aufweist:
(A) mindestens ein Polyglycidylether-Alkan, welches mindestens zwei Glycidylether-Funktionen aufweist und abgesehen von diesen Funktionen ausschließlich aus Kohlenstoff(-Atomen) und Wasserstoff(-Atomen) besteht,
(B) mindestens ein unter den Silanen und Titanaten ausgewähltes Kupplungsmittel, und
(C) mindestens einen klebefähigen Filmbildner in Form eines Polymers oder eines Copolymers, der sich auf die Unversehrtheit und den Schutz der Glasfibern auswirkt.

2. Glasfibern nach Anspruch 1, dadurch gekennzeichnet, daß das Polyglycidylether-Alkan der folgenden Formel
C(R₁) (R₂) (R₃) (R₄)
entspricht, in der:
• R₁ unter den folgenden Gruppierungen ausgewählt ist: -X, -R'₁X,
• R₂ unter den folgenden Gruppierungen ausgewählt ist: -X, -R'₂X,
• R₃ unter den folgenden Gruppierungen ausgewählt ist: -H, -R'₃, -R'₃X, -X,
• R₄ unter den folgenden Gruppierungen ausgewählt ist: -H, -R'₄,
wobei:
• X eine Glycidylether-Funktion mit der Formel 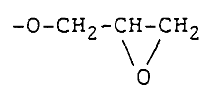 ist,
• R'₁, R'₂, R'₃, R'₄ Alkylgruppen sind.

3. Glasfibern nach einem der Ansprüche 1 oder 2, dadurch gekennzeichnet, daß das Kupplungsmittel ein Organosilan ist.

4. Glasfibern nach einem der Ansprüche 1 bis 3, dadurch gekennzeichnet, daß der klebefähige Filmbildner ein Epoxypolymer ist, ein Polyurethan, ein Epoxy-Polyurethan-Copolymer, oder ein Polyisocyanat, das blockierte Isocyanate enthält.

5. Glasfibern nach einem der Ansprüche 1 bis 4, dadurch gekennzeichnet, daß die Schmälzezusammensetzung des weiteren (D) wenigstens ein Schmiermittel aufweist.

6. Glasfibern nach einem der Ansprüche 1 bis 5, dadurch gekennzeichnet, daß die Schmälzezusammensetzung des weiteren (E) wenigstens ein Tensid und/oder ein Benetzungsmittel und/oder ein Antistatikum aufweist.

7. Glasfibern nach einem der Ansprüche 1 bis 6, dadurch gekennzeichnet, daß die Schmälzezusammensetzung in Form einer wäßrigen Dispersion vorliegt.

8. Glasfibern nach Anspruch 7, dadurch gekennzeichnet, daß der Anteil an Polyglycidylether-Alkan(en) zwischen 0,1 und 6 Gew.-% der Zusammensetzung liegt.

9. Glasfibern nach einem der Ansprüche 7 oder 8, dadurch gekennzeichnet, daß der Anteil an klebefähigem/n Filmbildner(n) zwischen 0,2 und 8 Gew.-% der Zusammensetzung liegt.

10. Glasfibern nach einem der Ansprüche 7 bis 9, dadurch gekennzeichnet, daß der Trockenextrakt der Zusammensetzung zwischen 1 und 15 Gew.-% der Zusammensetzung liegt.

11. Glasfibern nach einem der Ansprüche 1 bis 10, dadurch gekennzeichnet, daß ihr Abbrandverlust zwischen 0,1 und 2 Gew.-% liegt.

12. Verbundstoff mit mindestens einem thermoplastischen Polyester und geschmälzten Glasfibern, wobei mindestens ein Teil der Fibern Glasfibern nach einem der Ansprüche 1 bis 11 sind.

13. Verbundstoff nach Anspruch 12, dadurch gekennzeichnet, daß der thermoplastische Polyester mindestens ein Polybutylenterephthalat und/oder mindestens ein Polyethylenterephthalat und/oder mindestens ein Butylenterephthalat-Ethylenterephthalat-Copolymer aufweist.

## Claims

1. Glass threads coated with a sizing composition comprising:
(A) at least one polyalkane glycidyl ether, comprising at least two glycidyl ether groups and constituted only by carbon(s) and hydrogen(s) in addition to said groups,
(B) at least one coupling agent selected from silanes and titanates, and
(C) at least one adhesive film-forming agent in the form of a polymer or a copolymer affecting the integrity and the protection of the glass threads.

2. Glass threads according to Claim 1, characterised in that the polyalkane glycidyl ether corresponds to the following formula:
C(R₁)(R₂)(R₃)(R₄)
wherein:
• R₁ is selected from the following groups: - X, -R'₁X
• R₂ is selected from the following groups: -X, -R'₂X
• R₃ is selected from the following groups: -H, -R'₃, -R'₃X, -X
• R₄ is selected from the following groups: -H, -R'₄
in which:
• X is a glycidyl ether group of the formula: 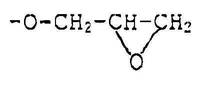
• R'₁, R'₂, R'₃ and R'₄ are alkyl groups.

3. Glass threads according to either Claim 1 or Claim 2, characterised in that the coupling agent is an organosilane.

4. Glass threads according to any one of Claims 1 to 3, characterised in that the adhesive film-forming agent is an epoxy polymer, a polyurethane, an epoxy/polyurethane copolymer or a polyisocyanate containing blocked isocyanates.

5. Glass threads according to any one of Claims 1 to 4, characterised in that the sizing composition also comprises (D) at least one lubricating agent.

6. Glass threads according to any one of Claims 1 to 5, characterised in that the sizing composition also comprises (E) at least one surfactant and/or one wetting agent and/or one anti-static agent.

7. Glass threads according to any one of Claims 1 to 6, characterised in that the sizing composition is in the form of an aqueous dispersion.

8. Glass threads according to Claim 7, characterised in that the amount of polyalkane glycidyl ether(s) is between 0.1 and 6% by weight of the composition.

9. Glass threads according to either Claim 7 or Claim 8, characterised in that the amount of adhesive film-forming agent(s) is between 0.2 and 8% by weight of the composition.

10. Glass threads according to any one of Claims 7 to 9, characterised in that the dry extract of the composition is between 1 and 15% by weight of the composition.

11. Glass threads according to any one of Claims 1 to 10, characterised in that their loss on ignition is between 0.1 and 2% by weight.

12. Composite comprising at least one thermoplastic polyester and sized glass threads, some at least of the threads being glass threads according to any one of Claims 1 to 11.

13. Composite according to Claim 12, characterised in that the thermoplastic polyester comprises at least one polybutylene terephthalate and/or at least one polyethylene terephthalate and/or at least one butylene terephthalate/ethylene terephthalate copolymer.
